# EUROPÄISCHE PATENTSCHRIFT

(11) **EP 1 625 575 B1**
(45) Veröffentlichungstag und Bekanntmachung des Hinweises auf die Patenterteilung: **30.04.2008**
(21) Anmeldenummer: 04732948.7
(22) Anmeldetag: 14.05.2004
(51) Int. Cl.: G11B 7/09

(54) **GERÄT ZUM LESEN UND/ODER BESCHREIBEN OPTISCHER AUFZEICHNUNGSTRÄGER**
APPARATUS FOR READING AND/OR WRITING OPTICAL RECORDING MEDIA
APPAREIL POUR LIRE UN SUPPORT D'ENREGISTREMENT OPTIQUE ET/OU ECRIRE SUR CE SUPPORT

(30) Priorität: 16.05.2003 DE 10322424
(43) Veröffentlichungstag der Anmeldung: 15.02.2006
(73) Patentinhaber: Thomson Licensing, 92100 Boulogne-Billancourt (FR)
(72) Erfinder: BÜCHLER, Christian, 78052 Villingen-Schwenningen (DE)
(74) Vertreter: Thies, Stephan
(86) Internationale Anmeldenummer: PCT/EP2004/005198
(87) Internationale Veröffentlichungsnummer: WO 2004/102547

(56) Entgegenhaltungen:
- EP-A- 1 148 481
- EP-A- 1 172 807
- WO-A-02/17311
- PATENT ABSTRACTS OF JAPAN Bd. 2000, Nr. 22, 9. März 2001 (2001-03-09) & JP 2001 126273 A (NEC CORP), 11. Mai 2001 (2001-05-11)

## Beschreibung

Die Erfindung betrifft Steuerungsverfahren und Vorrichtungen für ein Spurzählen in Geräten zum Lesen und Beschreiben optischer Speichermedien, insbesondere die Gewinnung eines Signals, dessen Phasenlage zu einem Spurfehlersignal die Bewegungsrichtung eines Aktuators relativ zu den Spuren anzeigt. Das Dokument WO-A-02/17311 offenbart ein Gerät zum Lesen/Beschreiben optischer Aufzeichnungsträger mit Differentieller Fokus Methode für land-Groove Spur-Anordnungen.

Vorbekannte Lösungen für das Erkennen der Bewegungsrichtung und des Spurtyps setzen voraus, dass ein Kontrastunterschied zwischen Spuren vom "Groove" Typ G und Spuren vom "Land" Typ L besteht. Es wird ein Mirror Signal oder Radial Contrast Signal verwendet, das relativ zu einem Spurfehlersignal ein Spurzählen oder Ermitteln des Spurtyps erlaubt. Diese Signale stehen aber nur zur Verfügung, wenn es einen Kontrastunterschied zwischen G und L gibt. Liegt ein solcher Kontrastunterschied z.B. auf unbespielten Positionen optischer Speichermedien nicht vor oder ist nicht auswertbar, so ist eine Richtungserkennung mit diesen vorbekannten Lösungen nicht möglich.

Eine Aufgabe der Erfindung ist es, Anordnungen und Verfahren zu beschreiben, welche es ermöglichen, auch auf optischen Speichermedien ohne Kontrast zwischen G und L unter Verwendung der Differential Focus Methode die Richtung von Spursprüngen oder den Typ gerade gekreuzter Spuren zu erkennen.

Erfindungsgemäß wird ausgenutzt, dass Focusfehlersignale sowohl eine Komponente, die den vertikalen Abstand der Objektivlinse zur Informationsschicht wiedergibt, als auch eine Focus-Offset-Komponente, die vom Typ und von der Lage der jeweils abgetasteten Spur abhängt, enthalten. Es wird auch ausgenutzt, dass bei geeigneter Gewichtung die Differenz zwischen Nebenstrahlfehlersignal und Hauptstrahlfehlersignal nur noch die von der horizontalen Lage der Abtaststrahlen abhängige Focus-Offset-Komponente enthält, während sich die vom vertikalen Abstand abhängigen Focusfehlerkomponenten in der Subtraktion gerade gegenseitig aufheben. Schließlich wird ausgenutzt, dass eine so bestimmte Focusoffsetkomponente DFO auf den Spurmitten maximale positive oder negative Amplitude und an den Grenzen zwischen G und L Nulldurchgänge hat. Das Signal DFO hat daher ähnliche Eigenschaften wie die vorbekannten Mirror Signale oder Radial Contrast Signale, und kann wie sie als Spurtypsignal zum Spurzählen verwendet werden.

Erfindungsgemäß wird vorgeschlagen, in einem Gerät zum Lesen und/oder Beschreiben optischer Aufzeichnungsträger Signale, die zum Durchführen der Differentiellen Fokus Methode benötigt werden, auch zum Generieren eines Land-Groove-Detektionssignals zu nutzen. Dies hat den Vorteil, gegenüber der Differentiellen Focus Methode keine zusätzliche Hardware zu benötigen, sondern lediglich einige logische Elemente zum Auswerten der Signale.

Eine erfindungsgemäße Abgleichmethode besteht auch darin, zum Erzeugen eines Spurtypsignals den optischen Aufzeichnungsträger unter Auslenkung der Objektivlinse in Focusrichtung abzutasten; zwei Messsignale zu messen, die unterschiedlich gebildet werden und Aussagen über den Abstand der Objektivlinse relativ zum Aufzeichnungsträger und über die Position des Abtaststrahls relativ zu den Spuren des Aufzeichnungsträgers enthalten; die Messsignale auszuwerten und abhängig davon Zweiggewichte einzustellen; und das Spurtypsignal durch Kombinieren von mit verschiedenen Zweiggewichten multiplizierten Fehlersignalen zu bilden.

Mit anderen Worten: Die Erfindung beschreibt Verfahren und Vorrichtungen zur Steuerung von optischen Speichergeräten, die es ermöglichen, auch in kontrastlosen Bereichen der Aufzeichnungsträger ein Signal zu gewinnen, dessen Phasenlage zu einem Spurfehlersignal die Bewegungsrichtung eines Aktuators relativ zu den Spuren und den Spurtyp anzeigt. Aus den Focusfehlersignalen von Haupt- und Nebenabtaststrahl wird ein Gewichtungsfaktor eingestellt und ein geeignetes Spurtypsignal gewonnen.

Die vorliegende Erfindung wird nachfolgend anhand bevorzugter Ausführungsbeispiele unter Bezugnahme auf die beigefügten Zeichnungen näher erläutert.
- Figur 1A: zeigt eine Anordnung des Standes der Technik zur Gewinnung eines Spurfehlersignals DPP nach dem Differential Push Pull Verfahren.
- Figur 2A: zeigt eine Anordnung des Standes der Technik zur Gewinnung eines Differential Focus Error Signals DFE.

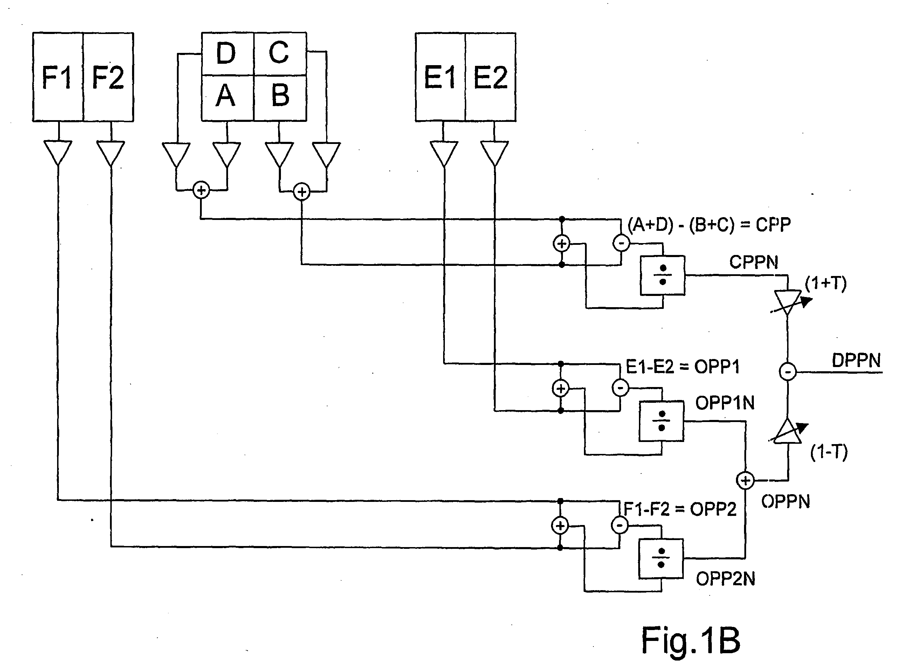

- Figur 1B: zeigt eine Anordnung zur Gewinnung eines normierten Spurfehlersignals DPPN mit Normierung und Gewichtung beider Teilsignale CPPN, OPPN.

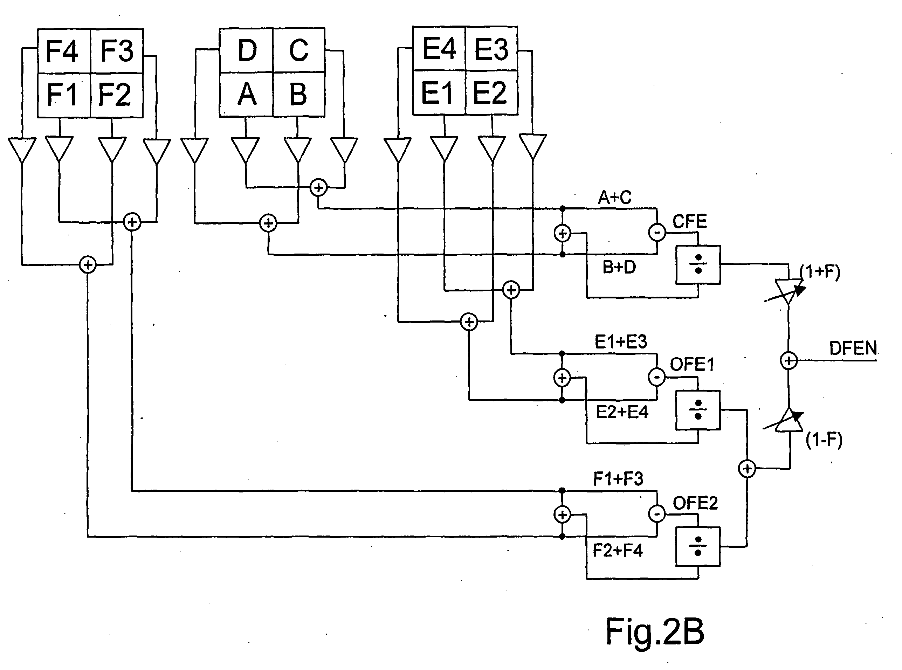

- Figur 2B: zeigt eine Anordnung zur Gewinnung eines normierten Differential Focus Error Signals DFEN mit Normierung und Gewichtung beider Teilsignale CFEN, OFEN.

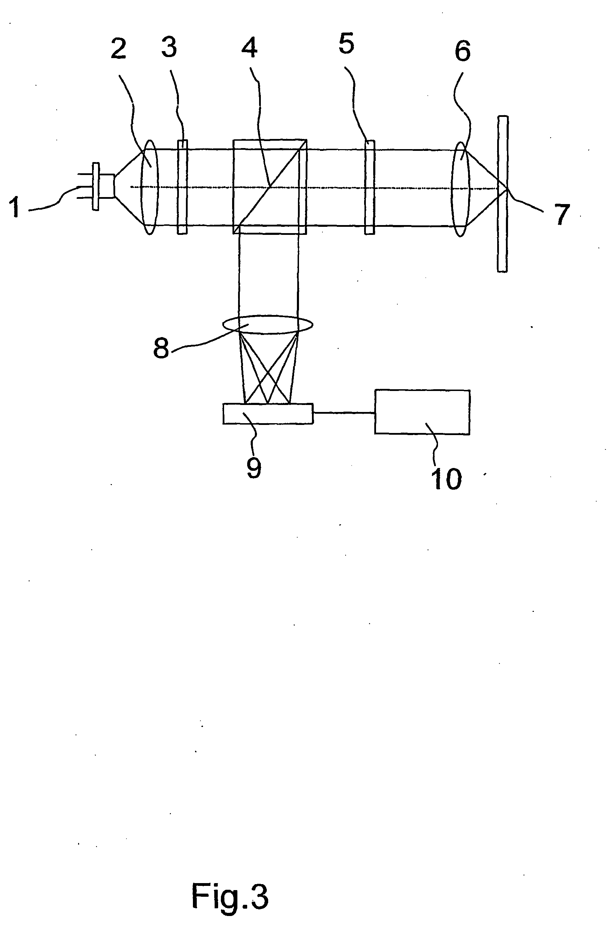

- Figur 3: zeigt den Aufbau eines optischen Abtasters.

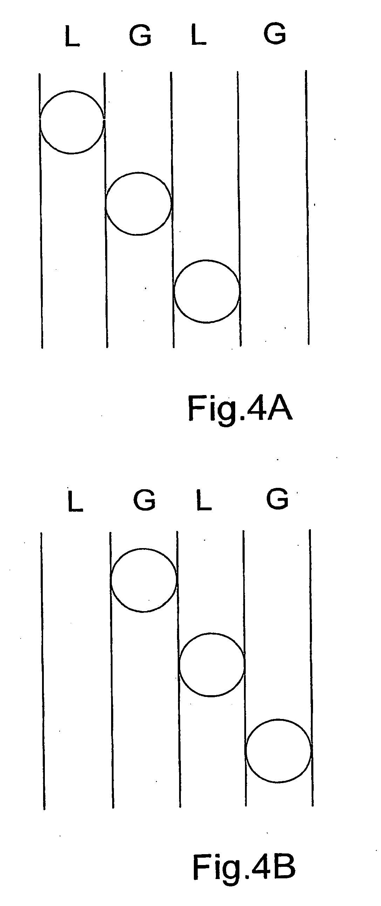

- Figur 4A: zeigt schematisch eine Anordnung aus Spuren und Abtaststrahlen, bei der der Haupt-Abtaststrahl auf die Mitte einer Spur G fällt.
- Figur 4B: zeigt schematisch eine Anordnung aus Spuren und Abtaststrahlen, bei der der Haupt-Abtaststrahl auf die Mitte einer Nebenspur L fällt.

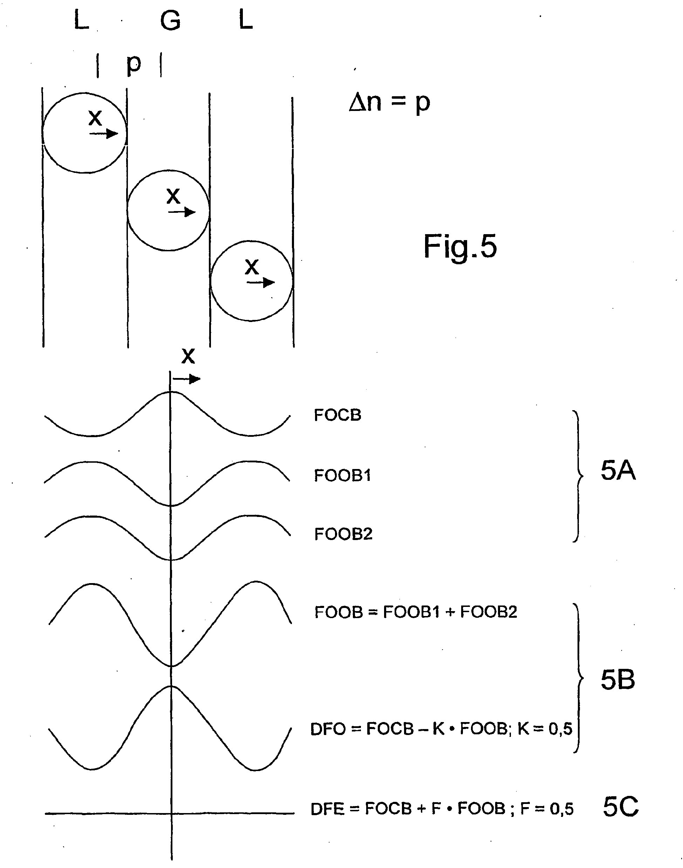

- Figur 5: zeigt die Anordnung von Fig. 4A, zusammen mit Verläufen der bei horizontaler Bewegung auftretenden focusfehlerabhängigen Komponenten.

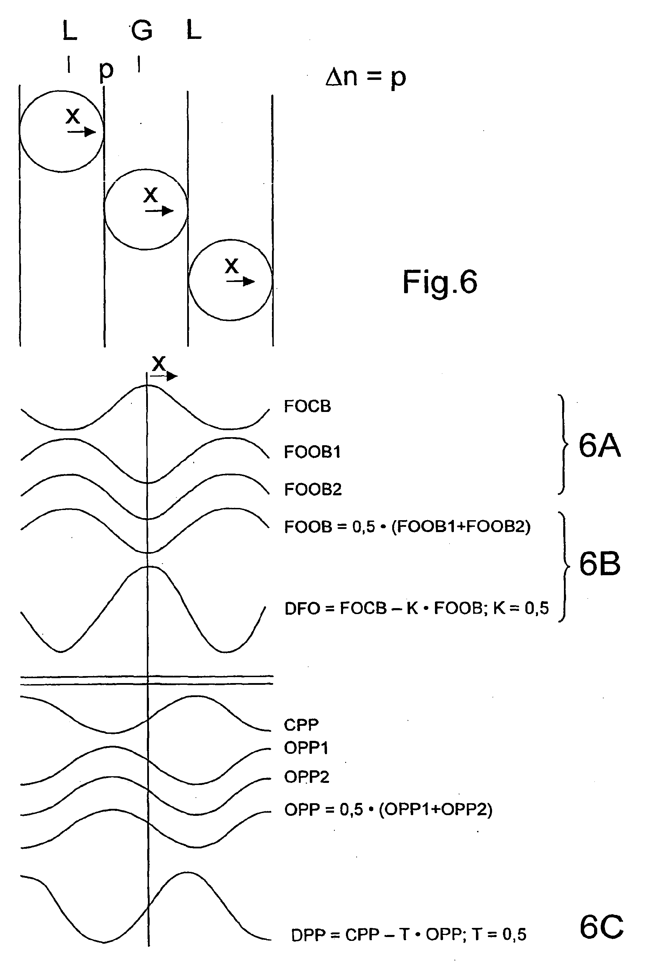

- Figur 6: zeigt die Anordnung von Fig. 4A, zusammen mit Verläufen der zur Ermittlung von DFO und DPP verwendeten Signale, für einen angenommenen Strahlabstand Δn=p.

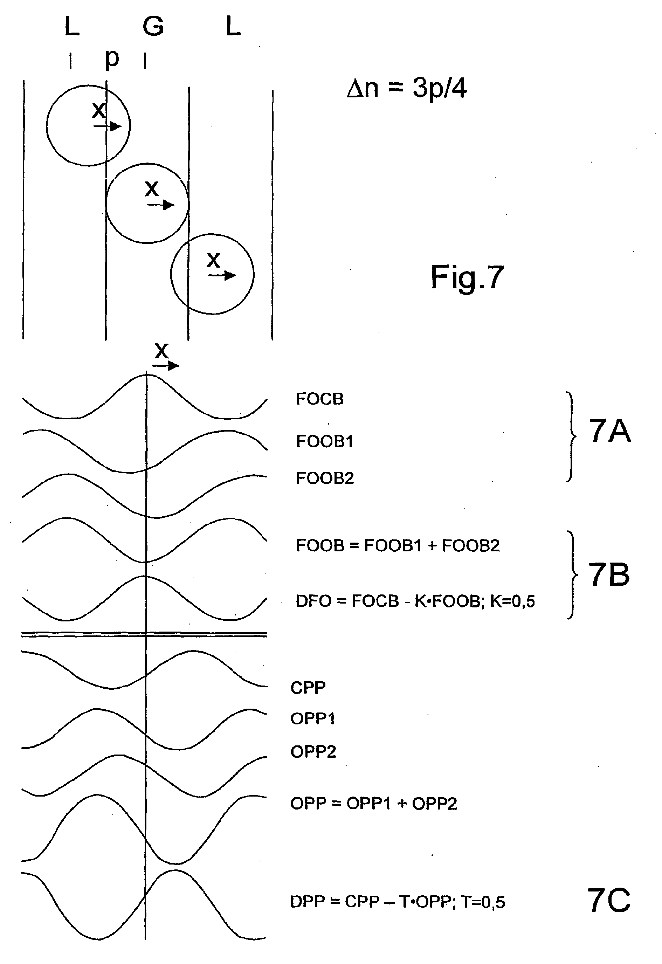

- Figur 7: zeigt dasselbe für Strahlabstand Δn=3p/4.

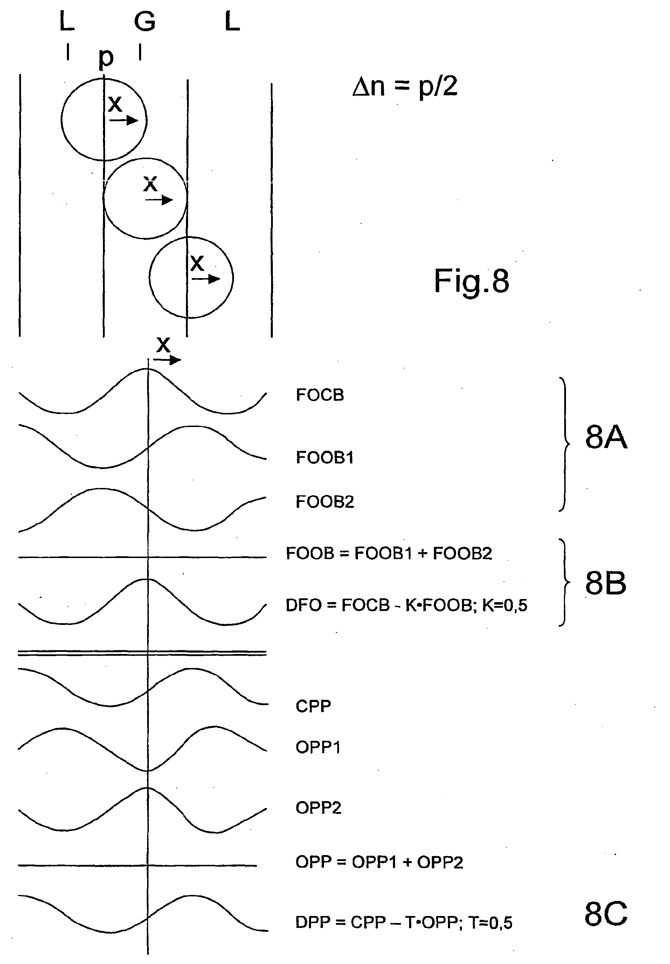

- Figur 8: zeigt dasselbe für Strahlabstand Δn=p/2.

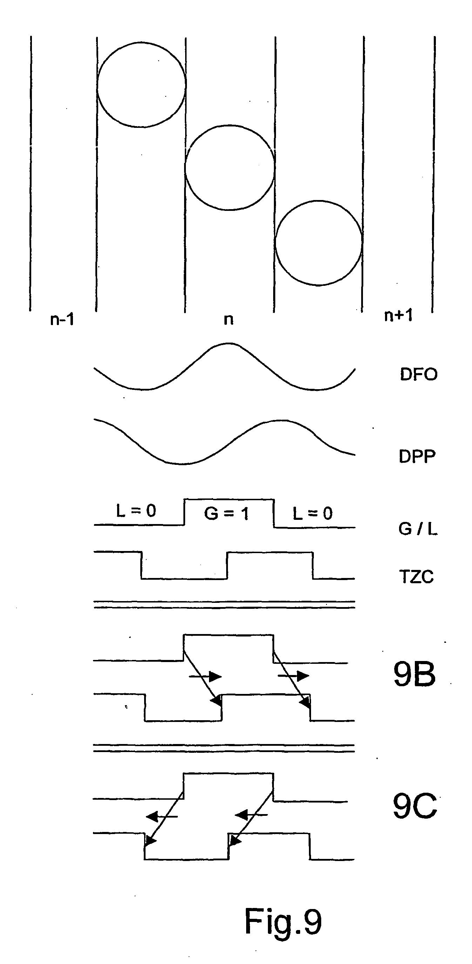

- Figur 9: zeigt die Bewegungsrichtungserkennung aus den DFO und DPP Signalen.

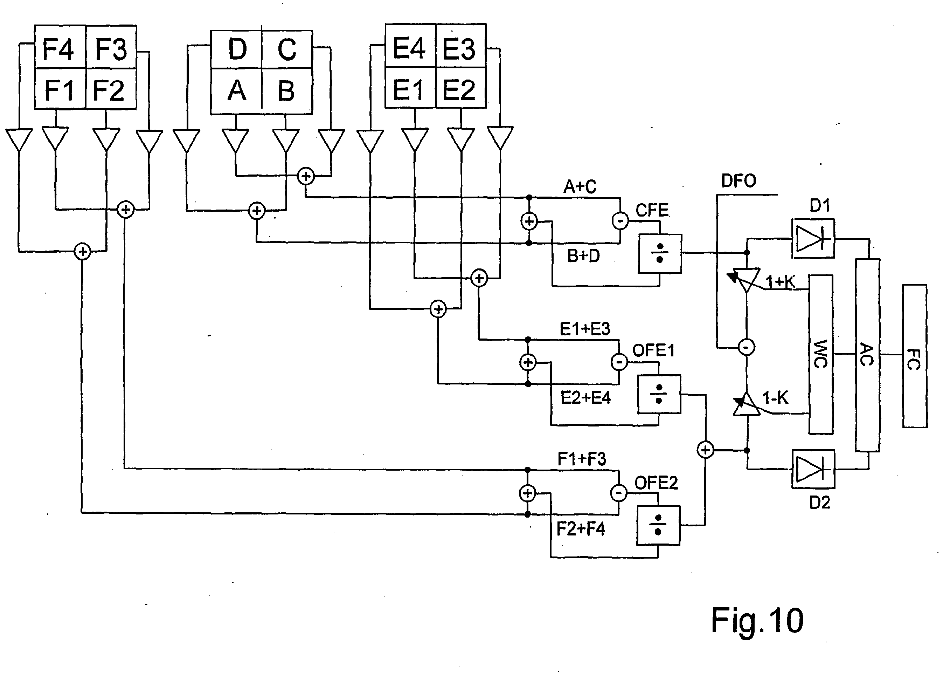

- Figur 10: zeigt das Blockschaltbild einer ersten Anordnung zur Gewinnung eines Differential Focus Offset Signals DFO.

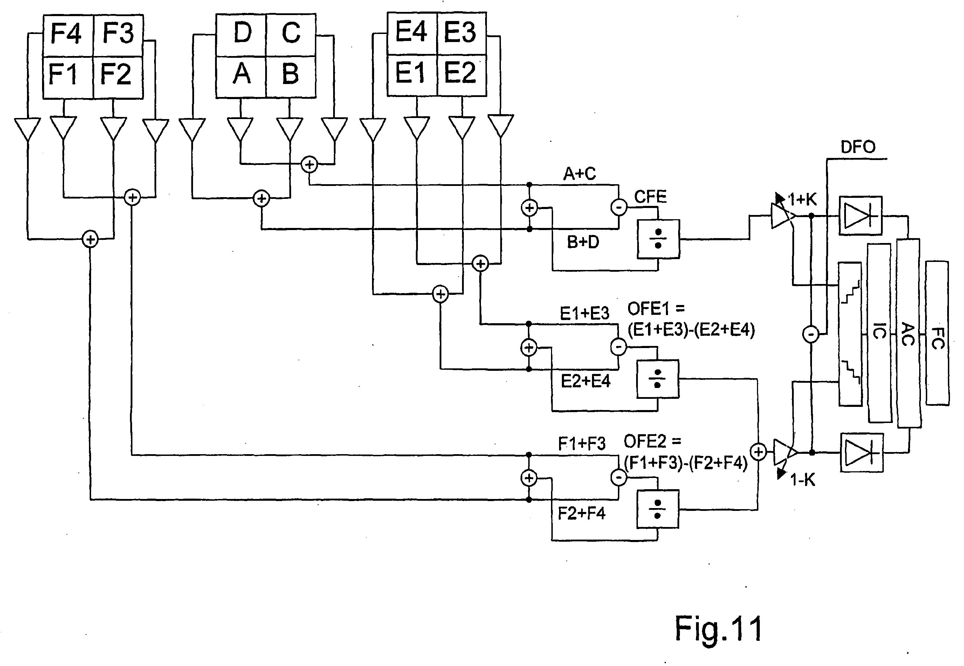

- Figur 11: zeigt das Blockschaltbild einer weiteren Anordnung zur Gewinnung eines Differential Focus Offset Signals DFO.

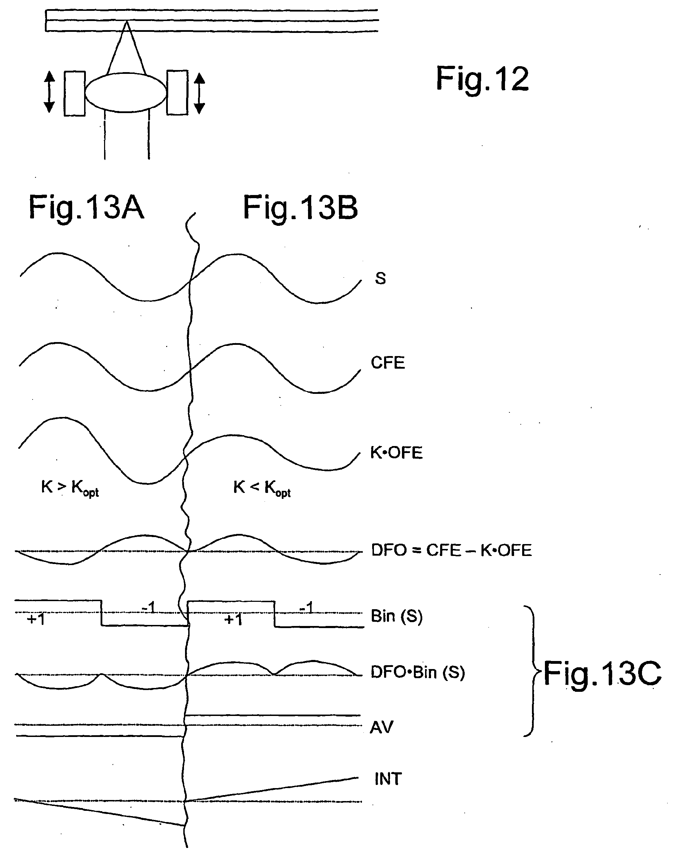

- Figur 12: zeigt schematisch eine Anordnung aus Aktuator, Objektivlinse, Abtaststrahl und Speichermedium.
- Figur 13: zeigt Signalverläufe für die Fälle eines zu kleinen bzw. zu großen Gewichtsfaktors K.

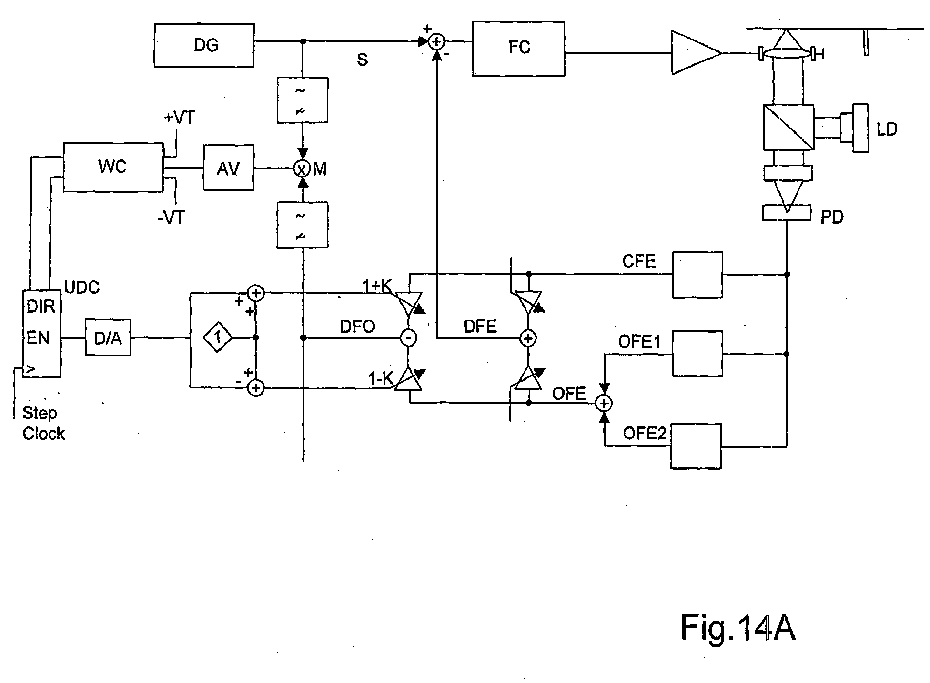

- Figuren 14A, 14B, 15 und 16: zeigen Blockschaltbilder weiterer Anordnungen zur Gewinnung eines Differential Focus Offset Signals DFO.

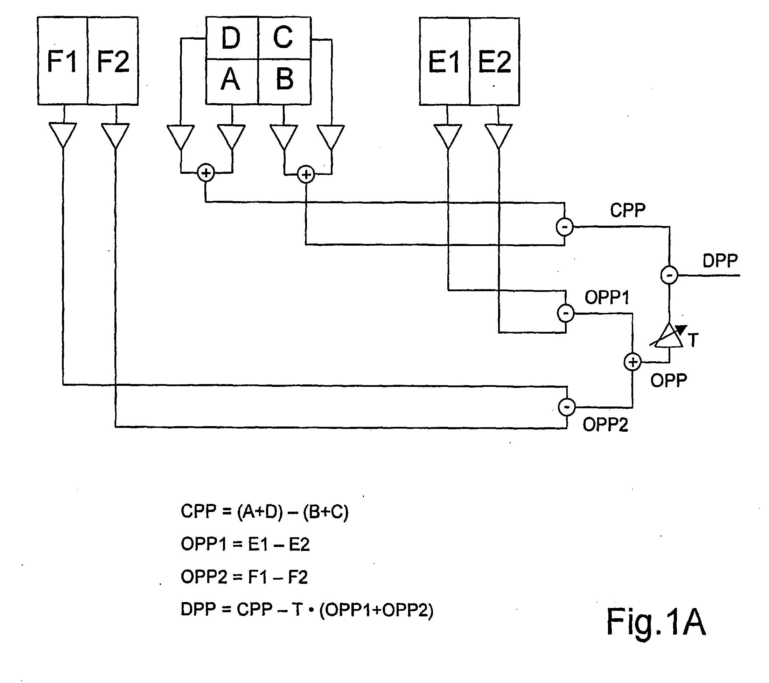

Figur 1A zeigt eine Anordnung gemäß der sogenannten Differential Push-Pull Methode DPP, einer verbreiteten Methode zur Bildung eines Spurfehlersignals. Bei ihr wird das optische Speichermedium mit drei Strahlen abgetastet. Ziel der DPP-Methode ist es, ein Spurfehlersignal DPP zu bilden, das keine Offsetabhängigkeit von der Position der Objektivlinse relativ zur optischen Achse des Abtasters hat.

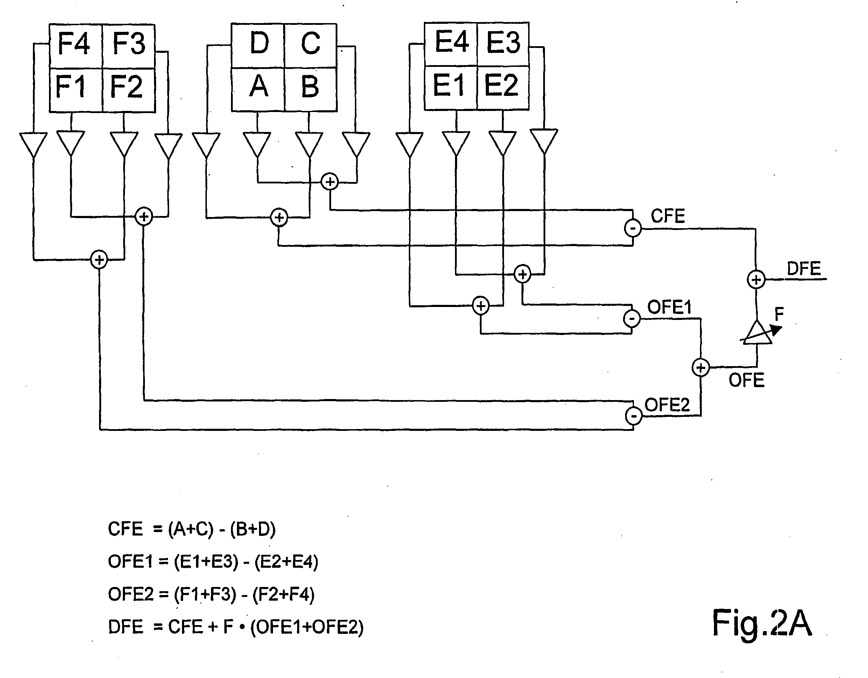

Figur 2A zeigt eine Anordnung gemäß der vorbekannten sogenannten Differential Focus Methode, auch Differential Astigmatism Method genannt, die immer dann angewendet werden kann, wenn der verwendete Photodetektor sowohl für den Hauptstrahl als auch für die Nebenstrahlen als Vierquadrantendetektor ausgeführt ist. Bei ihr wird sowohl für die Nebenstrahlen als auch für den Hauptstrahl ein Focusfehlersignal gebildet. Ein verbessertes Differential Focus Error Signal DFE wird gebildet durch Addieren der Focusfehler-Signalanteile des Hauptstrahls und der Nebenstrahlen, wobei die Anteile der Nebenstrahlen entsprechend ihrer Intensitäten zum Hauptstrahl gewichtet werden.

Vorteilhafterweise werden sowohl die Spurfehleranteile als auch die Focusfehleranteile des Hauptstrahls bzw. der Nebenstrahlen jeweils durch ihre Summe normiert. Dies ist in Fig. 1B für ein normiertes Differential Push-Pull Signal DPPN und in Fig. 2B für ein normiertes Differential Focus Error Signal DFEN gezeigt. Eine solche Normierung wird im Folgenden immer mit gemeint und nicht mehr explizit erwähnt. Unabhängig von der Normierung kann die Gewichtung zwischen Haupt- und Nebenstrahlfehlersignalen in nur einem Signalzweig erfolgen, wie in Fig. 1A bzw. 2A mit den Gewichtungsfaktoren T bzw. F gezeigt; oder in beiden Signalzweigen wie in Fig. 1B bzw. 2B mit den Gewichtungsfaktoren 1+T, 1-T bzw. 1+F, 1-F gezeigt.

Im Folgenden soll nur noch auf die DFE-Methode eingegangen werden:

Der Abtaststrahl eines optischen Abtasters, siehe Fig. 3, besteht bei Anwendung der Differential Focus Methode aus drei Strahlen. Um diese Aufspaltung in drei Strahlen zu erreichen, wird in den Strahlengang der Lichtquelle 1 ein optisches Gitter 3 eingefügt. Der Hauptstrahl oder sog. Strahl nullter Ordnung, der die abzutastende Information einer Spur eines optischen Speichermediums liest, enthält üblicherweise den größten Teil, etwa 80-90%, der Lichtinformation. Die beiden Nebenstrahlen oder Strahlen +/- 1. Ordnung enthalten jeweils die restlichen ca. 5-10% der Gesamtlichtintensität. Dabei wird vereinfachenderweise angenommen, dass die Lichtenergie der höheren Beugungsordnungen des Gitters Null sind.

Das optische Gitter wird so eingebaut, dass die Abbildung der beiden Nebenstrahlen bei auf Groove und Land beschriebenen Medien gerade die Mitte der Nebenspuren vom Typ L bzw. bei nur auf Groove beschriebenen Medien gerade den Bereich zwischen zwei Spuren neben der vom Hauptstrahl gelesenen Spur vom Typ G treffen. Da die Nebenstrahlen und der Hauptstrahl optisch voneinander trennbar sein sollen, sind deren Abbildungen auf dem Speichermedium und auf dem Detektor in ihrer Position voneinander getrennt. Rotiert das Medium, so befindet sich einer der Nebenstrahlen in Leserichtung vor und der andere Nebenstrahl hinter dem Hauptabtaststrahl.

Die reflektierten Strahlen durchlaufen auf dem Rückweg zum Photodetektor ein astigmatisch wirkendes optisches Bauteil, z.B. eine Zylinderlinse. Nach der Zylinderlinse entstehen zwei in x und y Richtung gesehen voneinander unterschiedliche Focuspunkte.

Aus jedem der Abtaststrahlen kann ein Focusfehlersignal erzeugt werden, das von der Lage des Strahls relativ zu der von ihm abgetasteten Spur abhängt. Das Focusfehlersignal jedes Abtaststrahls enthält dabei hauptsächlich eine Komponente, die den vertikalen Abstand der Objektivlinse zur Informationsschicht des optischen Speichermediums wiedergibt. Zusätzlich enthalten ist eine Focus-Offset-Komponente, die unabhängig vom vertikalen Abstand ist und nur vom Typ der jeweils abgetasteten Spur abhängt. Diese Focus-Offset-Komponente zeigt also eine Abhängigkeit von der horizontalen Lage der Abtaststrahlen zu den Spuren. Die Amplitude dieser Offsetkomponente ist von der Geometrie der Spuren, beispielsweise beschrieben durch Spurbreite, Spurabstand, oder die Spurtiefe von G und L, abhängig.

Wie oben bereits gesagt und in Fig. 4A gezeigt, wird das optische Gitter typischerweise so abgeglichen, dass die Neben-Abtaststrahlen gerade die Mitte einer Nebenspur L abtasten, wenn der Haupt-Abtaststrahl die Mitte einer Spur G erfasst. Wenn infolge einer Verschiebung der Objektivlinse gegenüber den Spuren des optischen Speichermediums der Haupt-Abtaststrahl gerade die Mitte einer Nebenspur L abtastet, liegen die Neben-Abtaststrahlen jeweils gerade auf der Mitte einer Spur G, wie in Fig. 4B gezeigt. Die Neben-Abtaststrahlen haben demnach immer die komplementäre Spurlage zur Spurlage des Haupt-Abtaststrahls. Da die oben erwähnten Focusoffsetkomponenten des Haupt-Abtaststrahles und der Neben-Abtaststrahlen je nach Spurtyp ein zueinander unterschiedliches Vorzeichen haben, heben sich diese Focusoffsetkomponenten bei einer korrekten Gewichtung von Nebenstrahlfehlersignal zu Hauptstrahlfehlersignal in der Addition gerade auf, während sich die Focusfehlerkomponenten zueinander addieren.

Um einen Spursprung steuern zu können, sollte eine Möglichkeit gefunden werden, die Richtung des Spursprungs, genauer gesagt die Richtung der Bewegung der Objektivlinse in Bezug auf die Spuren, sowie die Anzahl der gekreuzten Spuren und den Spurtyp, G oder L, ermitteln zu können. Damit ist richtungsabhängiges Spurzählen möglich, das zusammen mit Groove-Land Erkennung sicheres Spurspringen sowie sicheres Schließen des Spurregelkreises ermöglicht.

Wie bereits oben erwähnt, haben die Nebenstrahlen bei entsprechender Winkeleinstellung der optischen Gitters üblicherweise die komplementäre Spurlage zur Spurlage des Haupt-Abtaststrahls. Dies ist in Fig. 5A gezeigt. Wird die Objektivlinse in horizontaler Richtung x gegenüber den Spuren des optischen Speichermediums verschoben, so liegt der Haupt-Abtaststrahl beispielsweise zu einem bestimmten Zeitpunkt so, dass er gerade die Mitte einer Nebenspur L abtastet. In diesem Fall liegen die Neben-Abtaststrahlen jeweils gerade auf der Mitte einer Spur G. Auf den Haupt-Abtaststrahl wirkt dann die für Nebenspuren L typische focusoffsetabhängige Komponente FOCB, während auf die Neben-Abtaststrahlen die für Abtastspuren G typische focusoffsetabhängige Komponente FOOB1, FOOB2 wirkt. Zusätzlich wirkt auf alle drei Abtaststrahlen gleichermaßen die focusfehlerabhängige Komponente, also eine Komponente in Abhängigkeit des vertikalen Abstandsfehlers. Diese ist in Fig. 5A-C nicht gezeigt, da hier nur die durch die horizontale Verschiebung der Abtaststrahlen hervorgerufenen focusoffsetabhängigen Komponente sichtbar sind.
Da die horizontale Spurlage der drei Strahlen sich nur gemeinsam ändern kann, ändern sich die Focusoffsetkomponenten gleichzeitig in Abhängigkeit der momentanen Spurlage.

Um die bei Verschiebung der Abtaststrahlen in horizontaler Richtung entstehenden Focusoffsetkomponenten zu erhalten, werden die Anteile FOOB1, FOOB2 zunächst zu einem Nebenstrahlfehlersignal FOOB addiert und anschließend unter Anwendung einer vorbestimmbaren Gewichtung vom Hauptstrahlfehlersignal FOCB subtrahiert. Bei korrekt eingestellter Gewichtung verstärken sich dabei wie in Fig. 5B gezeigt die Focusoffsetkomponenten, während sich die vom vertikalen Abstand abhängigen Focusfehlerkomponenten gerade gegenseitig aufheben.

Fig. 5C zeigt ergänzend, wie zur Bildung des differentiellen Focusfehlersignals DFE die Signale der Nebenstrahlen und des Hauptstrahls mit einer Gewichtung F addiert werden, wobei sich hier bei korrekt eingestellter Gewichtung F die focusoffsetabhängigen Komponenten gegenseitig aufheben.

Üblicherweise wird der Strahlabstand Δn zwischen Haupt- und Nebenstrahlen, wie in Fig. 5 gezeigt, auf Δn=p eingestellt. Dabei ist p als Abstand zwischen der Mitte der Spur G und der Mitte der Nebenspur L definiert. Abweichend davon ist es auch möglich, den Abstand Δn in sinnvollen Grenzen zu variieren. Die Figuren 6A-6C, 7A-7C und 8A-8C zeigen die resultierenden focusoffsetabhängigen, Komponenten DFO jeweils in den Figurteilen A und B sowie die Bildung des Spurfehlersignals DPP jeweils in den Figurteilen C für verschiedene Strahlabstände Δn. Die theoretische Grenze des Werts für Δn liegt im Bereich von 0<Δn<2p, die praktisch verwendbare Grenze liegt im Bereich von p/2<Δn<3p/2, da sich die Phase der Nebenstrahlkomponenten FOOB und OPP außerhalb dieser praktisch verwendbaren Grenze invertiert.

Typischerweise zeigen die focusoffsetabhängigen Anteile für den jeweiligen Abtaststrahl auf den jeweiligen Spurmitten von L oder G eine maximale Amplitude, während sie an den Grenzen zwischen G und L einen Nulldurchgang haben. Das durch Verrechnung der focusoffsetabhängigen Anteile der jeweiligen Abtaststrahlen gebildete Signal DFO ist von seinen Eigenschaften her ähnlich zu denen des sogenannten Spiegelsignals oder Mirror Signals oder denen des Radial Contrast Signals. Das Mirror Signal oder das Radial Contrast Signal stehen aber nur zur Verfügung, wenn es aufgrund der optischen Eigenschaften des optischen Aufzeichnungsträgers einen Kontrastunterschied zwischen G und L gibt, während der focusoffsetabhängige Anteil im DFE Signal auch ohne Kontrastunterschied auswertbar ist. Ebenso wie das Mirror Signal oder das Radial Contrast Signal lässt sich der focusoffsetabhängige Anteil relativ zu einem Spurfehlersignal zum Spurzählen oder zum Ermitteln des Spürtyps verwenden.

Dabei zeigt die Polarität des focusoffsetabhängigen Anteils an, welcher Spurtyp gerade abgetastet wird. Aus der Phase zwischen dem focusoffsetabhängigen Anteil und einem Spurfehlersignal, z.B. PP oder DPP, kann die Richtung der Bewegung der Objektivlinse in Bezug auf die Spuren sowie die Anzahl der gekreuzten Spuren sowie der momentan abgetastete Spurtyp ermittelt werden. Fig. 9 zeigt, wieder über dem Ort x, ein Differential Focus Offset Signal DFO, ein Differential Push-Pull Signal DPP, ein aus DFO durch Binärisierung gebildetes Spurtypsignal G/L, und ein aus DPP gebildetes Track Zero Cross Signal TZC. Im Figurenteil 9B ist gezeigt, dass eine Bewegung der Abtaststrahlen von links nach rechts daran zu erkennen ist, dass auf steigende oder fallende Flanken im G/L Signal gleichartige Flanken im TZC Signal folgen. Figurenteil 9C zeigt Entsprechendes für eine Bewegung von rechts nach links.

Wie oben bereits erwähnt, wird die Focusoffsetkomponente gewonnen, indem die Nebenstrahlfehlersignale zunächst zueinander addiert und anschließend unter Anwendung einer vorbestimmbaren Gewichtung vom Hauptstrahlfehlersignal subtrahiert werden. Dazu muss der Gewichtungsfaktor, der zur Kompensation des focusfehlerabhängigen Anteils führt, in geeigneter Weise bestimmt werden.

Eine erste Methode besteht darin, die Amplituden der Focusfehleranteile der Nebenstrahlen als ein erstes Messsignal und die Amplitude des Focusfehleranteils des Hauptstrahls als ein zweites Messsignal beim Durchlaufen des Focuspunkts, sog. Focus Ramping, zu ermitteln und durch Auswertung der Amplituden den Gewichtungsfaktor zu berechnen bzw. so einzustellen, dass die Focusfehlerbeiträge sich nach Anwendung der Subtraktion gerade aufheben.

In einem ersten Schritt wird die Objektivlinse so bewegt, dass die Abtaststrahlen durch den Focuspunkt auf dem optischen Speichermedium bewegt werden, Focus Ramping. Dabei wird, wie in Fig. 10 gezeigt, die Amplitude der Summe der Nebenstrahlfehlersignale mit Hilfe eines ersten Spitzenwertdetektors D1 und die des Hauptstrahlfehlersignals mit Hilfe eines zweiten Spitzenwertdetektors D2 ermittelt. Für die Auswertung vergleicht die Gewichtungsberechnung die Amplituden in einer Amplitudenvergleichseinheit AC und berechnet daraus in einer Gewichtungsberechnungseinheit WC einen Gewichtungsfaktor. Mit der Amplitudenvergleichseinheit AC ist die Fokussteuerung FC verbunden. Anschließend wird die Summe der Nebenstrahlfehlersignale vom Hauptstrahlsignal unter Anwendung des ermittelten Gewichtungsfaktors K subtrahiert. Dabei wird vorausgesetzt, dass sich der Gewichtungsfaktor aus den Amplituden berechnen lässt.

Eine alternative Methode, gezeigt in Fig. 11, besteht darin, die Amplituden der gewichteten Haupt- bzw. Nebenstrahlfehlersignale als erstes und zweites Messsignal zu vermessen und in der Auswertung wenn die Amplitudenvergleichseinheit AC eine Differenz feststellt den Gewichtungsfaktor des schwächeren Signals zu erhöhen bzw. den des stärkeren Signals zu verringern. Dies kann durch einen iterativen Prozess geschehen, der mehrere Focusdurchläufe beinhaltet und von einer Iterationsstufensteuerung IC dann beendet wird, wenn die Differenz der Amplituden einen vorbestimmten Wert unterschreitet.

Die beiden oben beschriebenen Methoden setzen voraus, dass die Objektivlinse jeweils ein- oder mehrmals durch den Focuspunkt bewegt wird. Dieses Bewegen durch den Focuspunkt ist vergleichsweise zeitaufwendig und sollte für eine ausreichende Einstellgenauigkeit mehrmals wiederholt und die Messwerte gemittelt werden.

Eine dritte und besonders vorteilhafte Methode zur Einstellung des Gewichtungsfaktors wird im Folgenden beschrieben.

Bei der Verwendung dieser Methode wird davon ausgegangen, dass die Objektivlinse sich in der Nähe des optimalen Focuspunks befindet und der Focusregler bereits aktiviert ist. Der Spurregler ist ebenfalls bereits aktiviert, so dass die Abtaststrahlen die wie oben beschriebenen vorbestimmten Positionen auf den Spuren eines optischen Speichermediums abtasten.

An einem Summenpunkt wird in den geschlossenen Focusregelkreis ein von einem Störsignalgenerator DG erzeugtes Störsignal S eingespeist. Dieses Störsignal S ist vorteilhafterweise sinusförmig und hat eine Amplitude, die den Arbeitspunkt des Focusreglers um beispielsweise 10% seines maximalen Regelbereichs moduliert. Dies hat zur Folge, dass die focusfehlerabhängigen Anteile der jeweiligen Abtaststrahlen um etwa 10% ihrer Maximalwerte moduliert werden. Die Maximalwerte sind dabei gegeben durch die Spitze-Spitze Amplitude des Focusfehlersignals beim Bewegen der Objektivlinse durch den Focuspunkt. Bewegt sich nun beispielsweise die Objektivlinse durch die Störsignalmodulation auf die Informationsschicht zu, so werden die focusfehlerabhängigen Anteile der Nebenstrahlen und des Hauptstrahls positiv. Entfernt sich die Objektivlinse von der Informationsschicht, so werden die focusfehlerabhängigen Anteile der drei Abtaststrahlen negativ, siehe Fig. 12.

Wird nun das Hauptstrahlsignal mit einer zu groß eingestellten Gewichtung K'>Kₒₚₜ oder die Summe der Nebenstrahlsignale mit einer zu niedrig eingestellten Gewichtung K voneinander subtrahiert, so wird die Focusfehlerkomponente des Hauptstrahlsignals in der Subtraktion nicht vollständig durch die Focusfehlerkomponente des Nebenstrahl-Summensignals kompensiert, siehe Fig. 13A. Das Ausgangssignal nach der Subtraktion weist infolgedessen einen zum Störsignal S gegenphasig liegenden Signalanteil auf, das Produkt aus binärisiertem Störsignal Bin(S) und DFO ist negativ und hat daher einen negativen Mittelwert AV, und auch das Ausgangssignal INT des Integrators ist negativ.

Wird andererseits das Hauptstrahlsignal mit einer zu klein eingestellten Gewichtung K'<Kₒₚₜ oder die Summe der Nebenstrahlsignale mit einer zu groß eingestellten Gewichtung K voneinander subtrahiert, so wird die Focusfehlerkomponente des Hauptstrahlsignals in der Subtraktion durch die Focusfehlerkomponente des Nebenstrahl-Summensignals überkompensiert, siehe Fig. 13B. Das Ausgangssignal nach der Subtraktion weist für diesen Fall einen zum Störsignal S in Phase liegenden Signalanteil auf.

Für beide Fälle gilt, dass die Amplitude nach der Subtraktion abhängig von der Fehlgewichtung zwischen Haupt- und Nebenstrahlsignalen ist.

Ziel ist es, die Gewichtung K, K' so einzustellen, dass die durch die Störsignalmodulation des Focusreglers resultierende und somit focusfehlerabhängige Amplitude nach der Subtraktion zu Null wird.

Da das focusfehlerabhängige Signal nach der Subtraktion eine von der Fehlgewichtung zwischen Haupt- und Nebenstrahlsignalen abhängige Phasenlage aufweist, und da der Betrag der Amplitude dieses Signals näherungsweise proportional zum Abgleichfehler des Gewichtungsfaktors ist, lässt sich vorteilhafterweise ein Synchrondemodulator für die Auswertung verwenden, um eine automatisierte Einstellung des Gewichtungsfaktors K, K' durchzuführen. Dabei kann alternativ zur Verwendung eines Gewichtungsfaktors K für die Nebenstrahlfehlersignale oder eines Gewichtungsfaktors K' für die Hauptstrahlfehlersignale in vorteilhafter Weise die Gewichtung auf zwei Gewichtungsfaktoren 1+K, 1-K in den beiden Signalzweigen aufgeteilt werden, wie dies in den Ausführungsbeispielen in den Fig. 14A-B, Fig. 15 und Fig. 16 gezeigt ist. Durch diese Aufteilung des Gewichtungsfaktors wird erreicht, dass die Amplitude des Signals DFO weniger von der Einstellung des Gewichtungsfaktors abhängig ist.

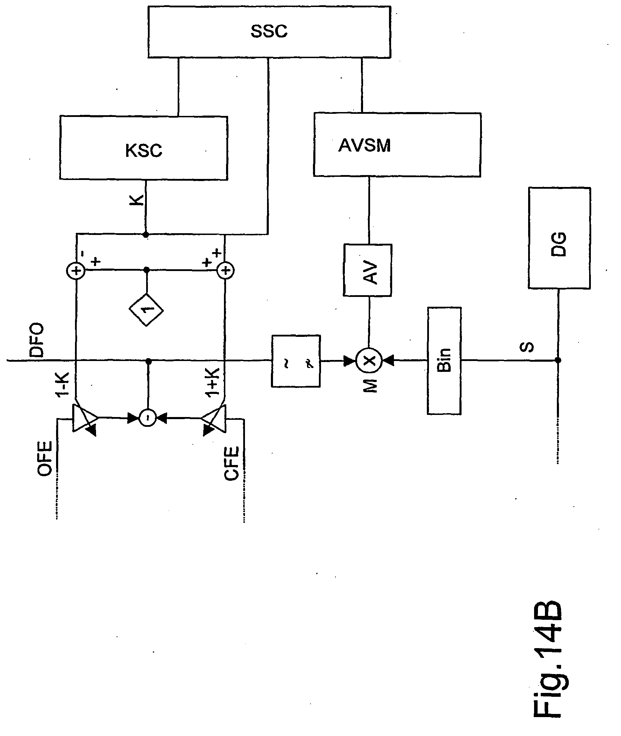

Der Synchrondemodulator besteht in einer ersten, in Fig. 14A gezeigten Variante aus einem Multiplizierer M, einer Mittelwertbildungseinheit AV und einer Steuerschaltung aus einem Fensterkomparator WC und einem Aufwärts-Abwärts-Zähler UDC für den Gewichtungsfaktor. Mit Hilfe des Multiplizierers M, der das Ausgangssignal DFO des Subtrahierers als ein erstes Messsignal mit dem Störsignal S als einem zweiten Messsignal multipliziert, wird eine pulsierende Gleichspannung erzeugt, deren Polarität von der Phase zwischen den Eingangssignalen des Multiplizierers M und deren Mittelwert vom Betrag der Amplitude des Ausgangssignals DFO des Subtrahierers abhängt. Die Steuerschaltung für den Gewichtungsfaktor wertet die Polarität des gebildeten Mittelwerts aus und ändert schrittweise den Gewichtungsfaktor K in einer von der Polarität abgeleiteten Richtung. Dies geschieht in mehreren iterativen Schritten so lange, bis der Betrag des Mittelwerts innerhalb eines vorbestimmten Grenzwerts liegt. Dazu wird üblicherweise ein Fensterkomparator WC verwendet, dessen Vergleichsspannungen +VT, -VT vorgegeben sind. Da der Mittelwert idealerweise bei korrekt eingestellter Gewichtung K zu Null werden soll, sind die Vergleichsspannungen +VT, -VT so klein zu wählen, dass der optimale Gewichtungsfaktor K mit ausreichender Genauigkeit gefunden wird. Anstatt des Mittelwerts kann auch alternativ die Amplitude als Kriterium für das Erreichen des richtigen Gewichtungsfaktors K ausgewertet werden. Da der Betrag des Mittelwerts näherungsweise proportional zum Abgleichfehler des Gewichtungsfaktors K ist, lässt sich die Zahl der iterativen Abgleichschritte reduzieren, die zum optimalen Gewichtungsfaktor führen. Ist beispielsweise aus einem ersten Abgleichschritt der in einer Gewichtungsänderungseinheit SSC gebildete Quotient aus der festgestellten Gewichtungsänderung zu der in der Mittelwertänderungseinheit AVSM gemessenen Mittelwertänderung bekannt, so lässt sich daraus, wie in Fig. 14B gezeigt, in einer Stufenberechnungseinheit KSC der nächste Gewichtungsschritt berechnen und so die Anzahl der Schritte bis zum Erreichen des optimalen Gewichtungsfaktors K reduzieren.

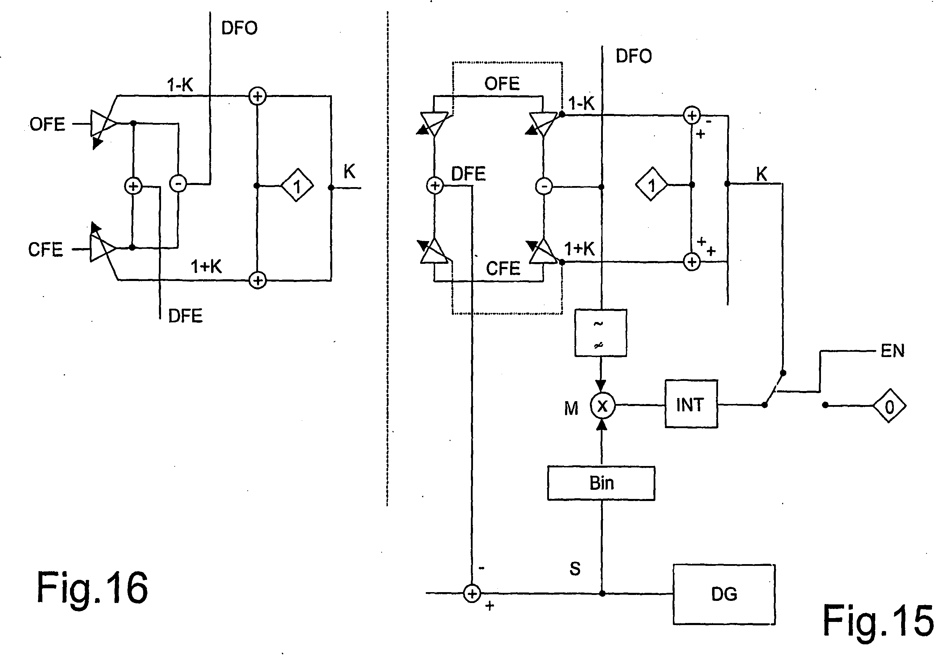

In einer zweiten Variante, siehe Fig. 15, besteht der Synchrondemodulator aus einem Multiplizierer M, einem Integrator INT sowie einer Anpassschaltung für den Gewichtungsfaktor. Dabei kann beispielsweise das typischerweise sinusförmige Störsignal S als erstes Messsignal vor der Multiplikation in einem Binärisierer Bin binärisiert werden, wobei die Ausgänge des Binärisierers +1 oder -1 sind. Der Multiplizierer M multipliziert dann das Ausgangssignal des Subtrahierers als zweites Messsignal mit +1 oder -1, wobei wiederum eine pulsierende Gleichspannung entsteht, deren Polarität von der Phase zwischen den Eingangssignalen des Multiplizieres M und deren Mittelwert vom Betrag der Amplitude des Ausgangssignals des Subtrahierers abhängt. Der auf den Multiplizierer folgende Integrator INT ändert seine Ausgangsspannung so lange, bis der Wert der Multiplikation zu Null wird. Dies ist genau dann der Fall, wenn der optimale Gewichtungsfaktor K erreicht ist. Verbindet man demnach die Ausgangsspannung des Integrators INT mittels einer Anpassschaltung mit der Gewichtungseinstellung, so entsteht eine Regelschleife, die sich wegen des Integrators INT im Rückkopplungszweig automatisch so einstellt, dass das Eingangssignal des Integrators INT zu Null wird.

Besonders mit Hilfe der beiden Varianten entsprechend der dritten Abgleichmethode ist es möglich, den Gewichtungsfaktor K relativ genau zu ermitteln. Alle Abgleichmethoden lassen sich in vorteilhafter Weise durch digitale Signalverarbeitung oder durch einen digitalen Signalprozessor realisieren. Zur Bildung eines Signals zum Spurzählen reichen alternativ auch zwei Abtaststrahlen aus, also beispielsweise der Hauptstrahl sowie nur einer der Nebenstrahlen.

Die oben beschriebenen Methoden zur Ermittlung des richtigen Gewichtungsfaktors können für die Bildung eines Signals zum Spurzählen verwendet werden, wobei bei Anwendung der Subtraktion von Hauptstrahl-Fehlersignal und Nebenstrahl-Summenfehlersignal die Kompensation der Focusfehlerkomponenten erfolgt.

Unter der Voraussetzung, dass das Verhältnis zwischen den Empfindlichkeiten für Focusoffsetkomponenten und Focusfehlerkomponenten für den Hauptstrahl und die Nebenstrahlen gleich ist, kann der ermittelte Gewichtungsfaktor ebenfalls dazu verwendet werden, ein Nebenstrahl-Summenfehlersignal und ein Hauptstrahl-Fehlersignal miteinander gewichtet zu addieren, um die darin enthaltenen Focusoffsetkomponenten zu kompensieren und die Focusfehlerkomponenten zu erzeugen (Fig. 16). Ein korrekt eingestellter Gewichtungsfaktor sorgt dann einerseits dafür, dass das DFO-Signal keine focusfehlerabhängigen Komponenten und andererseits das DFE-Signal keine focusoffsetabhängigen Komponenten enthält. Die Verwendung des gleichen Gewichtungsfaktors hängt im Wesentlichen von den Eigenschaften des optischen Abtasters und der Position Δn der Nebenstrahlen ab.

Üblicherweise ist die Ermittlung des Gewichtungsfaktors ein Bestandteil innerhalb eines Ablaufs von mehreren Abgleichschritten, die nach dem Einschalten eines Geräts zum Lesen oder Schreiben eines optischen Speichermediums durchgeführt werden. Diese Abgleichschritte werden durchgeführt, bevor beispielsweise ein Lese- oder Schreibvorgang gestartet wird.

Der Vorteil der beiden Varianten entsprechend der dritten Abgleichmethode ist es, dass sie während des Lesens oder Schreibens eines optischen Speichermediums ebenfalls durchführbar sind, sofern Amplitude des in den Focusregelkreis eingekoppelten Störsignals S so gewählt wird, dass der Lese- oder Schreibvorgang nicht gestört wird. So kann gewährleistet werden, dass trotz Erwärmung des Geräts oder anderer Einflüsse die Qualität des Lese- oder Schreibvorgangs erhalten bleibt.

Die Erfindung betrifft somit das Problem, daß aufzeichnungsfähige optische Disks gemäß einiger bereits bestehender oder zukünftiger Standards eine sogenannte Land-and-Groove-Struktur aufweisen. Dabei werden Informationen sowohl auf einer Spur (Groove) aufgezeichnet also auch auf dem Bereich zwischen zwei Spuren, der oft auch als Rasen, Mirror-Bereich oder Groove bezeichnet wird. Zumindest für einige Typen derartiger aufzeichnungsfähiger Disks oder optischer Aufzeichnungsträger besteht nahezu kein Unterschied in der Reflektivität zwischen Land-Bereichen und Groove-Bereichen, zumindest solange diese noch nicht beschrieben sind. Bei einem Spursprung, der über derartige unbeschriebene Bereiche hinweggeht, ist es daher nicht einfach oder sogar unmöglich, die Anzahl der überquerten Spuren korrekt zu zählen. Erfindungsgemäß wird vorgeschlagen, Signale, die zum Durchführen der Differentiellen Fokussierungs-Methode, die auch als Differentielle Astigmatismus-Methode bezeichnet wird, generiert werden, zusätzlich dazu zu nutzen, ein Signal zu generieren, welches anzeigt, ob der Abtaststrahl gerade eine Landspur oder eine Groovespur abtastet. Während eines Spursprungs wird dieses Signal dann zum Zählen der Anzahl der überquerten Spuren genutzt. Gemäß der Differentiellen Fokussierungs-Methode werden Fokusfehlersignale gemäß der Astigmatismus-Methode sowohl für den Hauptstrahl als auch für den oder die Nebenstrahlen eines Drei-Strahl-Abtastsystems erzeugt. Die gewichtete Summe dieser Signale bildet das Differenzielle Fokussierungsfehlersignal, das unabhängig von Fehlern ist, die durch unterschiedliche Offsets für Landspur und Groovespur erzeugt werden. Gemäß der Erfindung wird zusätzlich eine gewichtete Differenz dieser Signale generiert. Dieses Differenzsignal enthält keine beziehungsweise nahezu keine Anteile des Fokusfehlersignals, gibt aber den aktuellen Offsetwert an. Da der aktuelle Offsetwert vom Typ der gerade abgetasteten Spur, Landspur oder Groovespur, abhängt, zeigt dieses Signal an, ob gerade eine Landspur oder eine Groovespur abgetastet wird. Das Signal gemäß der Erfindung ist unabhängig vom Unterschied der Reflektivität der Landspuren und Groovespuren, da es auf Signalen beruht, aus denen das Fokusfehlersignal gewonnen wird, welches unabhängig vom Status der gerade abgetasteten Spur, beschrieben oder unbeschrieben, ist, sondern nur vom Spurtyp, Landspur oder Groovespur, abhängt. Am erfindungsgemäßen Gerät ist keine zusätzliche Hardware erforderlich, lediglich einige logische Elemente zum Auswerten der Signale gemäß der Erfindung sind erforderlich.

## Patentansprüche

1. Gerät zum Lesen und/oder Beschreiben optischer Aufzeichnungsträger, **gekennzeichnet dadurch, daß** Signale, die zum Durchführen der Differentiellen Fokus Methode benötigt werden, auch zum Generieren eines Land-Groove-Detektionssignals genutzt werden.

2. Verfahren zum Erzeugen eines Spurtypsignals (DFO) in einer Abtasteinheit für optische Aufzeichnungsträger (7) mit in Spuren abgelegten Daten, wobei die Abtasteinheit eine Objektivlinse (6) und einen Focus-Regelkreis aufweist, einen optischen Hauptstrahl und zumindest einen Nebenstrahl erzeugt, das vom Aufzeichnungsträger (7) reflektierte Licht mit mehreren den Strahlen zugeordneten Photodetektorsegmenten (9) auswertet, aus den Signalen der dem Hauptstrahl zugeordneten Photodetektorsegmente (9, A, B, C, D) ein erstes Fehlersignal (CFE) herleitet und aus den Signalen der den Nebenstrahlen zugeordneten Photodetektorsegmente (9, E1-E4, F1-F4) ein zweites Fehlersignal (OFE) herleitet,
**gekennzeichnet durch**:
- Abtasten des optischen Aufzeichnungsträgers (7) mit Auslenkung der Objektivlinse (6) in Focusrichtung;
- Messen von zwei Messsignalen (CFE, OFE, S), die unterschiedlich gebildet werden und Aussagen über den Abstand der Objektivlinse (6) relativ zum Aufzeichnungsträger (7) und über die Position des Abtaststrahls relativ zu den Spuren des Aufzeichnungsträgers (7) enthalten;
- Auswerten der Messsignale;
- Einstellen von Zweiggewichten (K, K', 1+K, 1-K) gesteuert **durch** das Ergebnis der Auswertung;
- Bilden des Spurtypsignals (DFO) **durch** Kombinieren des mit einem ersten der Zweiggewichte (1+K) multiplizierten ersten Fehlersignals (CFE) und des mit einem zweiten der Zweiggewichte (1-K, K, K') multiplizierten zweiten Fehlersignals (OFE).

3. Verfahren nach Anspruch 2, das mit eingeschaltetem Focus-Regelkreis angewendet wird, wobei die Auslenkung der Objektivlinse (6) durch Einspeisen eines Störsignals (S) in den Focus-Regelkreis erfolgt, eine in den Fehlersignalen (CFE, OFE) enthaltene und durch das Störsignal (S) verursachte Spurfehlerkomponente extrahiert wird, und aus der Phasenlage und der Amplitude der Spurfehlerkomponente die korrekte Einstellung der Zweiggewichte (K, K', 1+K, 1-K) ermittelt wird.

4. Verfahren nach Anspruch 3, wobei zur Extraktion der Spurfehlerkomponente das erste Messsignal aus dem Störsignal (S) und das zweite Messsignal aus der Differenz zwischen dem ersten Fehlersignal (CFE) und dem zweiten Fehlersignal (OFE) gebildet und als Auswertesignal das Produkt der Messsignale ausgewertet wird.

5. Verfahren nach Anspruch 4, wobei das Auswertesignal durch Mittelwertbildung oder Integration ausgewertet wird.

6. Verfahren nach Anspruch 2, bei dem die Auslenkung der Objektivlinse (6) durch Heranbewegen an den Aufzeichnungsträger (7) bei geöffnetem Focusregelkreis erfolgt.

7. Verfahren nach Anspruch 6, bei dem das erste Messsignal aus dem ersten Fehlersignal (CFE) gebildet wird, das zweite Meassignal aus dem zweiten Fehlersignal (OFE) gebildet wird, die Amplituden der Messsignale ausgewertet werden, und die Zweiggewichte (K, K', 1+K, 1-K) aus den gemessenen Amplituden so berechnet werden, dass die Differenz der mit den Zweiggewichten multiplizierten Fehlersignale verschwindet.

8. Verfahren nach Anspruch 6, bei dem das erste Messsignal aus dem mit dem ersten Zweiggewicht (1+K) multiplizierten ersten Fehlersignal (CFE) gebildet wird, das zweite Messsignal aus dem mit dem zweiten Zweiggewicht (1-K, K, K') multiplizierten zweiten Fehlersignal (OFE) gebildet wird, die Amplituden der Messsignale ausgewertet werden, und bei Unterschieden der Amplituden die Zweiggewichte (K, K', 1+K, 1-K) in mindestens einem Einstellungsschritt so verändert werden, dass sich die Differenz der Amplituden verringert.

9. Verfahren nach Anspruch 3 oder 8, wobei der Betrag der Veränderung der Zweiggewichte (K, K', 1+K, 1-K) in einem Einstellungsschritt in Abhängigkeit von dem Wert des Auswertesignals in einem vorherigen Einstellungsschritt bestimmt wird.

10. Verfahren nach einem der Ansprüche 2 bis 9, wobei beteiligte Signale auf die Summe der ihnen jeweils zugrundeliegenden Einzelsignale normiert werden.

11. Vorrichtung zur Durchführung eines der Verfahren nach Ansprüchen 2 bis 10.

## Claims

1. An appliance for reading from and/or writing to optical recording media, **characterized in that** signals which are required for carrying out differential focusing methods also are used for generation of a land groove detection signal.

2. A method for generating a track type signal (DFO) in a scanning unit for optical recording media (7) having data stored in tracks, with the scanning unit having an objective lens (6) and a focus control loop, producing an optical main beam and at least one secondary beam, evaluating light reflected from the recording medium (7) with a plurality of photodetector segments (9) which are associated with the beams, deriving a first error signal (CFE) from the signals of the photodetector segments (9, A, B, C, D) associated with the main beam and deriving a second error signal (OFE) from the signals of the photodetector segments (9, E1-E4, F1-F4) associated with the secondary beams,
**characterized by**:
- scanning of the optical recording medium (7) with deflection of the objective lens (6) in focus direction;
- measurement of two measurement signals (CFE, OFE, S) which are formed differently and contain details about the distance of the objective lens (6) relative to the recording medium (7) and about the position of the scanning beam relative to the tracks on the recording medium (7);
- evaluation of the measurement signals;
- setting of branch weights (K, K', 1+K, 1-K) controlled by the result of the evaluation;
- formation of the track type signal (DFO) by combination of the first error signal (CFE) multiplied by a first of the branch weights (1+K) and of the second error signal (OFE) multiplied by a second of the branch weights (1-K, K, K').

3. The method as claimed in claim 2, which is used with the focus control loop switched on, with the objective lens (6) being deflected by feeding a disturbance signal (S) into the focus control loop, a track error component contained in the error signals (CFE, OFE) and caused by the disturbance signal (S) being extracted, and the correct setting of the branch weights (K, K', 1+K, 1-K) being determined from the phase angle and the amplitude of the track error component.

4. The method as claimed in claim 3, with the first measurement signal being formed from the disturbance signal (S) and the second measurement signal being formed from the difference between the first error signal (CFE) and the second error signal (OFE) in order to extract the track error component, and the product of the measurement signals being evaluated as the evaluation signal.

5. The method as claimed in claim 4, with the evaluation signal being evaluated by averaging or integration.

6. The method as claimed in claim 2, in which the objective lens (6) is deflected by moving it toward the recording medium (7) with the focus control loop open.

7. The method as claimed in claim 6, in which the first measurement signal is formed from the first error signal (CFE), the second measurement signal is formed from the second error signal (OFE), the amplitudes of the measurement signals are evaluated, and the branch weights (K, K', 1+K, 1-K) are calculated from the measured amplitudes such that the difference between the error signals multiplied by the branch weights disappears.

8. The method as claimed in claim 6, in which the first measurement signal is formed from the first error signal (CFE) multiplied by the first branch weight (1+K), the second measurement signal is formed from the second error signal (OFE) multiplied by the second branch weight (1-K, K, K') the amplitudes of the measurement signals are evaluated and, if there are any differences between the amplitudes, the branch weights (K, K', 1+K, 1-K) are changed in at least one adjustment step such that the difference between the amplitudes is reduced.

9. The method as claimed in claim 3 or 8, with the magnitude of the change to the branch weights (K, K', 1+K, 1-K) in an adjustment step being determined as a function of the value of the evaluation signal in a previous adjustment step.

10. The method as claimed in one of claims 2 to 9, with signals which are involved being normalized with respect to the sum of the individual signals on which they are each based.

11. An apparatus for carrying out one of the methods as claimed in claims 2 to 10.

## Revendications

1. Appareil pour lire un support d'enregistrement optique et/ou écrire sur ce support, **caractérisé en ce que** des signaux, nécessaires pour l'exécution de la méthode de mise au point différentielle, sont également utilisés pour la génération d'un signal de détection méplat/sillon.

2. Procédé pour la génération d'un signal de type de piste (DFO) dans une unité de balayage pour un support d'enregistrement optique (7) avec des données mémorisées sur des pistes, où l'unité de balayage possède une lentille d'objectif (6) et un circuit de réglage de mise au point, génère un faisceau optique principal et au moins un faisceau secondaire, analyse la lumière réfléchie par le support d'enregistrement (7) avec plusieurs segments photodétecteurs (9) associés aux faisceaux, dérive un premier signal d'erreur (CFE) à partir des signaux des segments photodétecteurs (9, A, B, C, D) associés au faisceau principal et dérive un second signal d'erreur (OFE) à partir des signaux des segments photodétecteurs (9, E1-E4, F1-F4) associés au faisceau secondaire, **caractérisé par**:
- un balayage du support d'enregistrement optique (7) avec une déviation de la lentille d'objectif (6) dans la direction focale ;
- une mesure de deux signaux de mesure (CFE, OFE, S), lesquels sont générés de façon différente et contiennent une indication concernant l'écart de la lentille d'objectif (6) par rapport au support d'enregistrement (7) et concernant la position du faisceau de balayage par rapport aux pistes du support d'enregistrement (7) ;
- une évaluation des signaux de mesure ;
- un réglage de poids de branches (K, K', 1+K, 1-K), commandé selon le résultat de l'évaluation ;
- une génération du signal de type de piste (DFO) via une combinaison du premier signal d'erreur (CFE) multiplié par un premier des poids de branches (1+K) et du second signal d'erreur (OFE) multiplié par un second des poids de branches (1-K, K, K').

3. Procédé selon la revendication 2, utilisé avec un circuit de réglage de mise au point sous tension, où le décalage de la lentille d'objectif (6) a lieu via l'entrée d'un signal brouilleur (S) dans le circuit de réglage de mise au point, un composant d'erreur de piste contenu dans les signaux d'erreur (CFE, OFE) et entraîné par le signal brouilleur (S) est extrait, et le réglage correct des poids de branches (K, K', 1+K, 1-K) est établi à partir de la position de phase et de l'amplitude du composant d'erreur de piste.

4. Procédé selon la revendication 3, où pour l'extraction du composant d'erreur de piste le premier signal de mesure est généré à partir du signal brouilleur (S) et le second signal de mesure est généré à partir de la différence entre le premier signal d'erreur (CFE) et le second signal d'erreur (OFE) et le produit des signaux de mesure est analysé en tant que signal d'évaluation.

5. Procédé selon la revendication 4, où le signal d'évaluation est analysé via une formation de moyenne ou une intégration,

6. Procédé selon la revendication 2, dans lequel la déviation de la lentille d'objectif (6) a lieu via un rapprochement vers le support d'enregistrement (7) avec le circuit de réglage de mise au point ouvert.

7. Procédé selon la revendication 6. dans lequel le premier signal de mesure est généré à partir du premier signal d'erreur (CFE), le second signal de mesure est généré à partir du second signal d'erreur (OFE), les amplitudes des signaux de mesure sont analysées, et les poids de branches (K, K', 1+K, 1-K) sont calculées à partir des amplitudes mesurées de telle manière que la différence des signaux d'erreur multipliés par les poids de branches disparaît.

8. Procédé selon la revendication 6, dans lequel le premier signal de mesure est généré à partir du premier signal d'erreur (CFE) multiplié par le premier poids de branche (1 +K), le second signal de mesure est généré à partir du second signal d'erreur (OFE) multiplié par le second poids de branche (1-K, K, K'), les amplitudes des signaux de mesure sont analysées, et dans le cas d'une différence entre les amplitudes, les poids de branches (K, K', 1+K, 1-K) sont modifiés lors d'au moins une étape de réglage, de telle manière que la différence entre les amplitudes est réduite.

9. Procédé selon la revendication 3 ou 8, où la grandeur de la modification des poids de branches (K, K', 1+K, 1-K) est déterminée lors d'une étape de réglage en fonction de la valeur du signal d'évaluation d'une étape de réglage précédente.

10. Procédé selon une des revendications 2 à 9, où des signaux associés sont normalisés en fonction de la somme des signaux individuels auxquels Ils sont basés,

11. Dispositif pour l'exécution d'un des procédés selon les revendications 2 à 10.
